# EUROPEAN PATENT SPECIFICATION

(11) **EP 4 229 331 B1**
(45) Date of publication and mention of the grant of the patent: **12.06.2024**
(21) Application number: 20797682.0
(22) Date of filing: 15.10.2020
(51) Int. Cl.: F21S 45/10, B60Q 1/068, F16H 25/24, F16H 25/20

(54) **THERMAL-EXPANSION COMPENSATOR FOR HOLDING A LIGHT MODULE IN A HOUSING OF A HEADLAMP OF A MOTOR VEHICLE**
WÄRMEAUSDEHNUNGSKOMPENSATOR FÜR EINEN LICHTMODUL-HALTEMECHANISMUS IN EINEM KRAFTFAHRZEUG-SCHEINWERFERGEHÄUSE
COMPENSATEUR DE DILATATION THERMIQUE POUR MÉCANISME DE MAINTIEN D'UN MODULE D'ÉCLAIRAGE DANS UN BOÎTIER DE PHARE DE VÉHICULE AUTOMOBILE

(43) Date of publication of application: 23.08.2023
(73) Proprietor: HELLA GmbH & Co. KGaA, 59552 Lippstadt (DE)
(72) Inventor: MISSELWITZ, Burkhard, 33154 Salzkotten (DE); MEYER, Andreas, 59558 Lippstadt (DE); ELBRACHT, Frank, 59269 Beckum (DE); MARAPPAN, Sathisprabu, Vellankoil, Erode, 638054 Tamilnadu (IN); VENKATESAN, Dinakaran, Reddivalam, Coimbatore, 641035 Tamilnadu (IN)
(86) International application number: PCT/EP2020/079074
(87) International publication number: WO 2022/078607

(56) References cited:
- EP-A1- 3 616 993
- DE-A1-102009 035 565
- DE-A1-102011 000 735
- DE-A1-102012 111 311

## Description

The invention relates to a thermal-expansion compensator for holding a light module in a housing of a headlamp of a motor vehicle, a corresponding headlamp for a motor vehicle with a housing and a corresponding motor vehicle.

Light modules in headlamps are used for emitting light for illuminating the area in front of a vehicle, wherein the emitted light may be a low beam featuring a cut-off line. Here it is provided that the cut-off line of the low beam does not exceed a specified angle relative to the horizontal. However, the thermal behavior of the headlamp housing can lead to a relevant, i.e. not insignificant, displacement of the cut-off line relative to the horizontal and/or to the vertical, because the receptacle element leaves its specified position due to the thermal expansion behavior of the housing, resulting in a tilting of the carrier frame and consequently a tilting of the light module attached to the carrier frame of the headlamp, so that the cut-off line likewise leaves its specified angle or its specified height.

One goal in modern light modules is to produce the most exact light distribution possible on the street in front of a vehicle. In particular, a so-called horizontal cut-off line (hHDG) as well as a vertical cut-off line (vHDG), which separate an illuminated area from a non-illuminated area, can be generated in this way. The more precisely this cut-off line can be positioned, the more precisely these cut-off lines can increase the illuminated area, without the risk of blinding a driver possibly coming from the opposite direction. In other words, the illuminated area could be moved closer to an area that would blind a driver coming from the opposite direction. This method improves the illumination of the street and thus the viewing conditions at night. Such a control system, however, requires the most exact construction possible, that is, an especially low-play construction, and the lowest possible tolerances for the drive system, that is, the adjustment system of the headlamp, in particular, of a light source in the light module of the headlamp.

Because the entire headlamp changes with respect to its geometrical dimensions due to thermal expansion when temperatures fluctuate, the geometric boundary conditions for regulating the respective cut-off line also change. In other words, the origin for the adjustment system shifts within the absolute coordinate system for the positioning of the respective cut-off line on the street.

FEM simulations can be performed for overcoming impermissible tilting of the light module in the housing of the headlamp. However, numerical modeling of the complex thermomechanical behavior of a headlamp is often inadequate. An advantageous, thermomechanically stable arrangement of the receptacle elements for holding the light module in the housing of the headlamp can indeed minimize tilting of the light module, but disadvantageous thermal relationships of the housing can nevertheless lead to undesired tilting of the light module. For example, superimposing the thermal effect of the housing of the headlamp by the ambient temperature and also radiant heat from an engine of the motor vehicle forms a complex temperature field, so that thermal effects also on parts of the housing are taken into account only to a limited extent.

Taking into account the thermal changes for the control or the regulation with respect to the positioning of the cut-off line has the disadvantage that it requires, on one hand, particularly precise sensors, especially temperature sensors, and also particularly fine driving of actuators of the headlamp. It has already been proposed to use mechanical compensators, that is, compensators that exhibit thermal expansion in a headlamp, with this thermal expansion being directed opposite the relevant thermal expansion when the light module is in use. In this way, if the temperature changes, a complementary thermal expansion of a thermal-expansion compensator can compensate the corresponding thermal expansion of the light module.

Thermal-expansion compensators for compensating the thermal expansion of a light module are generally known. They are used to compensate thermal expansions, that is, changes in geometry of a light module. When light modules are operating, they are subjected to different working temperatures. The temperatures and thermal-expansion coefficients of the materials are being used to produce different thermal expansions, that is, different geometrical dimensions for the headlamp. DE 10 2012 111311 A1 presents such a thermal-expansion compensator.

In these known thermal-expansion compensators, it is disadvantageous that each of these must be developed specifically for the respective headlamp. Thus, for one, the respective geometric relationships in the headlamp must be taken into account and, secondly, the necessary compensating thermal expansion must be calculated exactly and incorporated in the material selection and geometry of the respective thermal-expansion compensator. In other words, each new development or each vehicle with specific headlamps requires a separate, newly designed thermal-expansion compensator. This increases, for one, the product diversity and thus the complexity of the headlamp and, secondly, the development and production costs.

Therefore, it is an object of the present invention to solve the disadvantages named above. In particular, it is the object of the present invention to provide a thermal-expansion compensator that can be used as universally as possible and that allows large structural play for the light module having a compact yet stable construction. This object is solved by the subject-matter of the claims. In particular, this object is solved by a thermal-expansion compensator according to claim 1, a headlamp according to claim 11 and a vehicle according to claim 12.

Further details of the invention unfold from the other claims as well as the description and the drawings. Thereby, the features and details described in connection with the thermal-expansion compensator of the invention apply in connection with the headlamp of the invention and with the vehicle of the invention, so that regarding the disclosure of the individual aspects of the invention it is or can be referred to one another.

According to the invention, the object is solved by a thermal-expansion compensator according to the appended claim 1.

This thermal-expansion compensator for holding the light module in the housing of the headlamp of the motor vehicle has the compensation insert extending along the compensation axis. The compensation axis may in particular be a longitudinal axis of the compensation insert. The compensation insert comprises the stop element, wherein the compensation insert can be connected to the housing or the light module, in particular the light module, by means of the connection element. Furthermore, the compensation holder is provided extending along the compensation axis, which may be a longitudinal axis of the compensation holder. The compensation holder comprises at least two stop receptacles, each one of which is configured for holding the stop element of the compensation insert. The connection element is arranged rigidly on the light module and the compensation holder is arranged rigidly on the housing. Obviously, the thermal-expansion compensator could also be arranged in the reverse direction between the light module and the housing, so that the compensation holder is formed for rigidly connecting to the light module and the connection element for the rigid arrangement on the housing of the headlamp.

In this thermal-expansion compensator, the compensation holder may be fixed to the housing or the light module such that the compensation holder can expand and/or contract freely along the compensation axis. Furthermore, the compensation insert extends in the compensation holder and can be held selectively in one of the at least two stop receptacles of the compensation element for forming the effective expansion length. The light module may comprise a carrier frame, to which the compensation holder or the compensation insert may be rigidly attached. The light module may further comprise one or multiple light sources arranged on the carrier frame.

By providing at least two stop receptacles in the compensation holder, when the thermal-expansion compensator is installed, its effective expansion length can be selected. The compensation holder may in particular be provided with at least or exactly three stop receptacles, at least or exactly four stop receptacles or at least or exactly five stop receptacles, for example. When the headlamp is installed, it is also possible to adapt the effective expansion length of the thermal-expansion compensator to the specifications of the headlamp, without having to use another, specifically constructed thermal-expansion compensator. In other words, a thermal expansion compensator according to the invention can be used very flexibly in this way and, above all, very universally for a plurality of different headlamps. The expansion length is configured by the position of the stop element of the compensation insert held in the compensation holder.

When the stop element is held in one of the stop receptacles, relative movement between the compensation holder and the compensation insert along the compensation axis is prevented. In other words, such axial movement is not permitted, so that a transfer of forces is possible in this axial direction between the compensation holder and the compensation insert. This can be realized, for example, through a positive fit at least in some regions between the stop element and the stop receptacle.

In this way, it is guaranteed that this relative movement is essentially prevented, in particular, it lies below the tolerances necessary for production. Preventing relative movement is thus to be understood technically and relative movements, that is, play in a specified tolerance range, are permissible. Here, a relative movement in both directions along the defined axes is prevented, so that forces can also be transferred in both directions.

"Holding" of the stop element of the compensation insert in the respective stop receptacle means a geometric correspondence, at least in some regions, between the stop element on the one hand and the stop receptacle on the other hand. The stop receptacle can be formed, for example, as a groove in which a projection in the form of the stop element can engage.

Further, compensation inserts of different sizes, i.e., lengths with the stop element provided at different positions, may be provided and chosen according to the thermal-expansion experienced at the headlamp at hand. For example, even the thermal-expansion between a right headlamp and a left headlamp in the same vehicle may be different and require not only different positioning of the stop element but also compensation inserts of different sizes with different positioning of the stop element inside the respective stop receptacles of the compensation holder.

Further, there may be different requirements for compensation, i.e. different compensation lengths in mm and also different compensation directions. This means, that one headlamp may require a compensator push effect meaning that the compensation insert pushes the compensation holder away from the connection element and the thereto rigidly connected housing or light module. It may, however, also be that a compensator pull effect is required, meaning that the compensation insert pulls the compensation holder towards the connection element and the thereto rigidly connected housing or light module. Whether a compensator push or pull effect is achieved may be determined by the choice of the respective compensation holder and its positioning with its stop element inside the compensation holder. This will be later explained in more detail with reference to the drawings for better intelligibility. The provision of the connection element inside of the first cavity of the compensation insert and the connection of the connection element inside of the compensation insert thereto provides for a particularly easy and reliable assembly of the thermal-expansion compensator. The connection element may be arranged along the compensation axis when inserted inside of the first cavity of the compensation insert. In this way, the outside of the compensation insert may be utilized to have the stop element and the inside, i.e. the first cavity, of the compensation insert can be utilized for connection with the connection element. Further, the internal arrangement of the compensation insert inside of the compensation holder has the advantage that the compensation insert is particularly well-protected. In addition, in this way, the volume of the compensation holder is used simultaneously for holding the compensation insert, so that the dimension allows, especially in the radial direction, an even more compact form. The further increased compactness produces greater play and, associated with this greater play, greater structural freedom in the use of the thermal-expansion compensator.

The stop element of the compensation insert is held in one of the at least two stop receptacles. The compensation insert may be located inside of a second cavity of the compensation holder. The connection element may be connected to the compensation insert inside of the first cavity. Such an assembly of the thermal-expansion compensator can be provided very easily and fast. Such assembly is very compact. Locating the compensation insert in the second cavity of the compensation holder provides for a thermal-expansion compensator, in which the respective components, i.e. compensation insert, compensation holder and connection element, may be easily fitted into each other for assembly and also disassembly, if needed. The connection element may be a screw. The screw can be very conveniently attached, in particular rigidly, to the light module or the housing. The wide availability of different screws, i.e. from different material, with different lengths and with different coupling elements at their free ends makes the screw a particularly cost-effective and flexible connection element for the thermal-expansion compensator.

The screw may comprise an outside threaded section. The compensation insert may comprise an inside threaded section in its first cavity for locking the screw inside of the compensation insert. Accordingly, the screw may be locked inside of the compensation insert by means of the outside threaded section engaging the inside threaded section. The locking of the screw via the threaded sections is a particular easy and stable way of attaching the screw to the compensation insert.

The compensation holder and/or the connection element may comprise a coupling element for connecting with the housing and/or the light module. The coupling element may be in the form of a spherical head, for example. This coupling element may be coupled to a corresponding coupling element of the housing or the light module.

The coupling element may be a bayonet coupling element, for example. The bayonet coupling element may have the type of a female bayonet coupling element, i.e. a bayonet opening, for receiving a corresponding bayonet coupling element having the type of a male bayonet coupling element, i.e. a bayonet adapter, or have the type of the female bayonet coupling element.

The coupling element may be a spherical head or a spherical socket, for example. The spherical head may be received in the spherical socket for easy and secure interlocking therewith. The construction of the coupling element as a spherical head has the advantage that this coupling cannot transfer bending moments at least in large swiveling ranges. In this way, it is possible that no twisting due to relative movements between the light module and the housing of the headlamp can be produced during the thermal compensation. The longevity of the thermal-expansion compensator is significantly improved in this way.

The at least two stop receptacles may be spaced apart from each other in the compensation holder along the compensation axis. The distance between the stop receptacles enables simple and convenient adjustment of the effective expansion length of the compensation insert by accordingly holding it in one of the at least two stop receptacles spaced apart from each other. Accordingly, when there are more than two stop receptacles, all the stop receptacles are spaced apart from each other. The distances between the stop receptacles may be equal or different to each other.

According to the invention, the stop element extends from the compensation insert transverse, in particular perpendicular, to the compensation axis. This extension allows an improved transfer of forces that are directed essentially along the compensation axis.

According to the invention, the stop element further extends around the compensation insert in a circumferential direction relative to the compensation axis. Also, the stop receptacles may be provided extending inside of the compensation holder in a circumferential direction relative to the compensation axis. In both cases, the extension of the circumferential direction may be partially or completely in the circumferential direction. It is also possible that the stop receptacles of the compensation holder are essentially larger than the stop element of the compensation insert, but nevertheless sufficiently prevent relative movement between the compensation holder and the compensation insert.

The compensation insert and/or the compensation holder may be made from plastic. Further, the connection element may be made from plastic as well. Thereby, they can be manufactured very cost-efficiently by means of injection molding, for example, and the thermal-expansion compensator becomes light-weight. However, the connection element, the compensation insert und the compensation holder may alternatively be from any other material such as metal, for example. The compensation insert, the connection element and the compensation holder may be made from the same or different materials.

The compensation holder may be formed integrally and consist of a single material. In particular, the compensation holder may have a monolithic construction. Also, the compensation insert may be formed integrally and consist of a single material. In particular, the compensation insert may have a monolithic construction.

The compensation insert and/or the compensation holder may be rotationally symmetric with respect to the compensation axis. In addition to the simplified production, for example, the rotationally symmetric construction also produces a reduction of undesired shear stresses in the respective components. In addition, the necessary use of materials and the costs associated with these materials decrease. The compactness of the entire thermal-expansion compensator can also be increased by such a construction.

The compensation insert may comprise a first slot for introduction of the connection element therein and/or the compensation holder may comprise a second slot for introduction of the compensation insert therein. By means of the slots, the assembly of the thermal-expansion compensator may be performed very easily via insertion of the components into the respective other components lateral relative to the compensation axis. The slot may extend from one longitudinal end of the respective component, i.e. the compensation insert or the compensation holder, to the other longitudinal end or before that.

The functioning of a thermal-expansion compensator according to the invention will be described as follows using an example:
The thermal-expansion compensator can be fixed on one side by means of one of its coupling elements, which may be, for example, a spherical head of the compensation holder engaged in a spherical socket of the housing of the headlamp, as previously described as one possible example. On the opposite side of the compensation holder, for example, a coupling element of the connection element may be fixed on the light module. The intermediate section of the thermal-expansion compensator thus can compensate for thermal expansion in the light module due to a change in length along of its compensation axis.

In particular, the compensation insert is responsible for the thermal compensation. Thus, when the temperature changes, the thermal-expansion coefficient of the material, in particular, of the compensation insert, changes the axial extent of this compensation insert. By changing the axial extent and also by fixing the coupling element, in particular, of the spherical head of the compensation holder, in the corresponding spherical socket in the housing of the headlamp, in this case, the change in length along the respective axis is transferred by means of the compensation insert and the connection element to the light module. According to the direction of the length variation, that is, as a function of whether the temperature increases or decreases, the connection element is likewise shifted along the axis. In this way, it is possible to shift the linkage point, that is, the bearing point between the thermal-expansion compensator and the light module. Here, the bearing point is shifted opposite the shifting of the light module caused by its own thermal expansion due to the identical change in temperature.

In other words, a change in temperature causes, on one hand, a thermal expansion of the light module and, on the other hand, a thermal expansion of the thermal-expansion compensator. The two thermal expansions are essentially complementary to each other, so that as a whole the two thermal expansions essentially cancel out and the headlamp remains at the desired predefined position. To achieve the complementing thermal expansions, the thermal-expansion compensator must be configured with appropriate length and the stop element must be inserted inside the appropriate one of the stop receptacles. Thereby, the thermal expansion of the headlamp does not have to be taken into account, or only to a smaller degree, in the control/regulation of the position of the respective cut-off line, so that the necessary control logic can have a simpler construction and, in particular, temperature sensors can be eliminated.

According to a second aspect of the invention, the object is solved by means of a headlamp for a vehicle with a housing, in which at least one light module is held in a predetermined position, whereby the headlamp comprises at least one thermal-expansion compensator according to the first aspect of the invention, the thermal-expansion compensator being disposed between the housing and the light module.

The headlamp is associated with the same advantages as explained above in detail through the use of a thermal-expansion compensator according to the first aspect of the invention.

In this headlamp, a housing is advantageously provided in which, for example, one or more light sources are provided. These light sources can be influenced by means of actuators, for example, by means of different optical systems, such as reflectors, lenses, or mirror systems with respect to their beam path and in this way a control/regulation of the position of the cut-off line in front of the vehicle can be varied with such a headlamp. The light modules are advantageously provided on a carrier frame that is provided for this purpose and is likewise part of the light module and is used as an interface to the housing of the vehicle. In other words, in this headlamp, it can be advantageous if the light module is held in the headlamp by means of a carrier frame of the light module and if the thermal-expansion compensator is arranged between the carrier frame and the housing. In such a case, the carrier frame forms, as part of the light module, the interface of the thermal-expansion compensator.

The thermal-expansion compensator may be attached directly to the housing or indirectly, i.e. via another component, to the housing. Further, the thermal-expansion compensator may be attached directly to the light module, in particular its carrier frame, or indirectly, i.e. via another part. In any case, the thermal-expansion compensator is disposed in between the housing and the light module in both respective cases.

Further, in the headlamp, two thermal-expansion compensators may be provided. One of the thermal-expansion compensators may be configured for compensating for thermally caused displacement of the vertical cut-off line and another one of the thermal-expansion compensators may be configured for compensating for thermally caused displacement of the horizontal cut-off line. The configuration of both thermal-expansion compensators may be achieved by their respective positioning and arrangement relative to the components inside the headlamp, i.e. the housing and the light module, in particular.

According to a third aspect of the invention, the object is solved by a vehicle having a headlamp according to the second aspect of the invention. The vehicle is associated with the same advantages as explained in detail above through the use of a thermal-expansion compensator according to the first aspect of the invention.

In particular, both headlamps of an automobile as a vehicle may have the thermal-expansion compensator. However, due to different thermal-expansions in both headlamps, the thermal-expansion compensator may be different in each one of the headlamps. That is, the thermal-expansion compensator of one headlamp may have a larger compensation holder and/or compensation insert and/or the stop element of the compensation insert held in a different stop receptacle of the compensation holder than the other headlamp. In any case, the thermal-expansion compensator allows for fast and easy assembly and disassembly to adjust the effective expansion length as required for a certain headlamp due to its design and tolerances, which may only show once assembled in the motor vehicle.

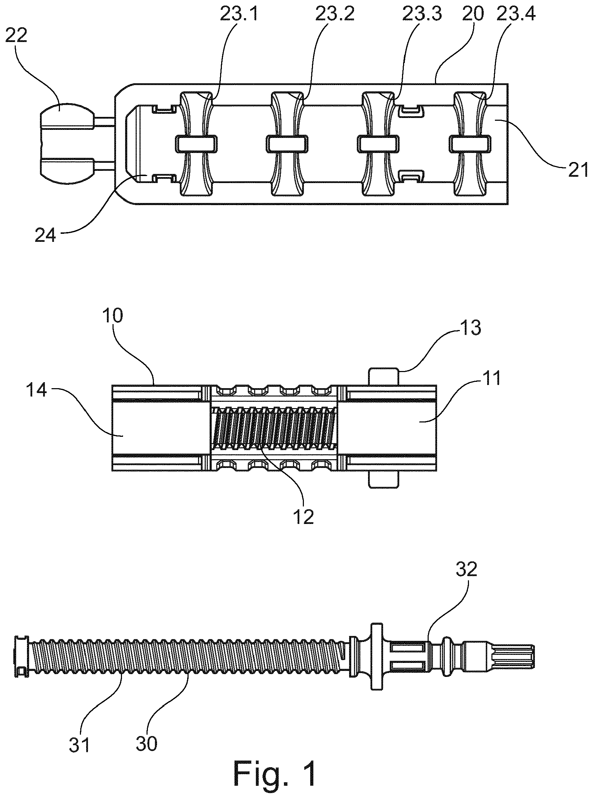

Further advantages, features and details of the invention unfold from the following description, in which by reference to drawings Figs. 1 to 15 embodiments of the present invention are described in detail. Thereby, the features of the claims as well as the features mentioned in the description can be essential for the invention as taken alone or in an arbitrary combination. In the drawings, it is schematically shown:
- Fig. 1: a side view on the parts of an unassembled thermal-expansion com pensator;
- Fig. 2: a side perspective view on a first assembly step for assembling the thermal-expansion compensator of Fig. 1;
- Fig. 3: a side perspective view on a second assembly step for assembling the thermal-expansion compensator of Fig. 1;
- Fig. 4: a side perspective view on the assembled thermal-expansion compensator of Fig. 1;
- Fig. 5: a side view on three different compensation inserts for the thermal-expansion compensator of Fig. 1;
- Fig. 6: a side view on two further different compensation inserts for the thermal-expansion compensator of Fig. 1;
- Fig. 7: a side view on two thermal-expansion compensators with the different compensation inserts according to Figs. 5 and 6;
- Fig. 8: a side view on another thermal-expansion compensators with a compensation insert from Fig. 5;
- Fig. 9: a side view on two further thermal-expansion compensators with the different compensation inserts according to Figs. 5 and 6;
- Fig. 10: a side perspective view on a first assembly step for assembling a further thermal-expansion compensator;
- Fig. 11: a side perspective view on a second assembly step for assembling a further thermal-expansion compensator;
- Fig. 12: a side view on the assembled further thermal-expansion compensator of Figs. 10, 11;
- Fig. 13: a side perspective view on a coupling step of the further thermal-expansion compensator of Fig. 12;
- Fig. 14: a schematic sectional view on a headlamp; and
- Fig. 15: a front view on a motor vehicle comprising headlamps according to Fig. 14.

Same objects in Fig. 1 to 15 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

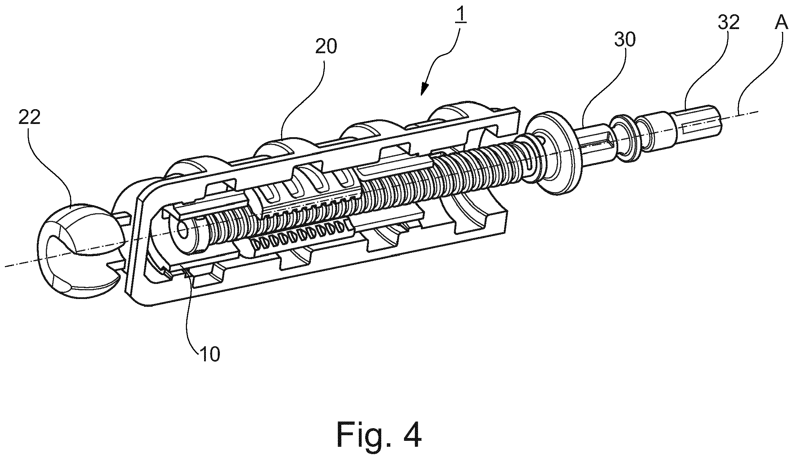

The assembled thermal-expansion compensator 1 shown in Fig. 4 consists of three separate components, as may be taken from Fig. 1 showing these components in an unassembled state. These components are a compensation holder 20, a compensation insert 10 and a connection element 30. The compensation holder 20, the compensation insert 10 and the connection element 30 are arranged coaxial to each other in the thermal-expansion compensator 1.

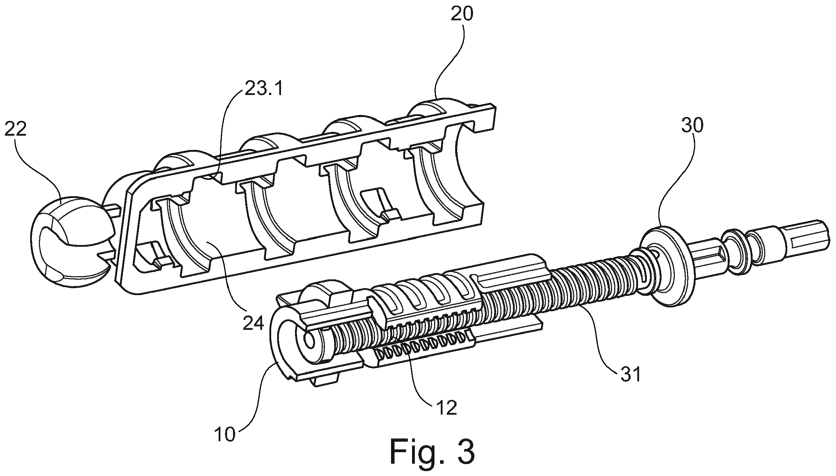

The compensation holder 20 comprises a second cavity 21 therein. The compensation holder 20 is closed at one of its longitudinal ends and comprises a coupling element 22 at that longitudinal end. The coupling element 22 in this case is formed by means of a spherical head, but may be any other suitable coupling element 22 as described herein. The second cavity 21 is open to the side by means of a second slot 24 such that the compensation insert 10 may be inserted into the second cavity 21 as shown in Fig. 3.

The compensation holder 20 further comprises several stop receptacles 23.1, 23.2, 23.3, 23.4. In this case, the number of stop receptacles 23.1, 23.2, 23.3, 23.4 is four, but it may alternatively be more or less than four. The stop receptacles 23.1, 23.2, 23.3, 23.4 are formed as grooves inside of the compensation holder 20.

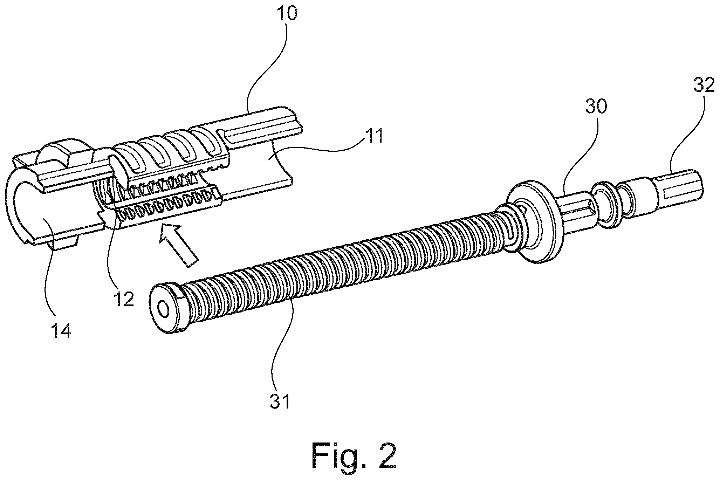

The compensation insert 10 comprises a first cavity 11 therein. The first cavity 11 is open towards both longitudinal ends of the compensation insert 10. The first cavity 11 or the compensation insert is open to the side by means of a first slot 14 such that the connection element 30 may be inserted into the first cavity 11 as shown in Fig. 2.

The compensation insert 10 comprises an inner threaded section 12 in its middle section. A stop element 13 is provided on the outside of the compensation insert 10, which is configured as a radially extending tongue for the stop receptacles 23.1, 23.2, 23.3, 23.4 configured as grooves.

In this particular case, the connection element 30 is a screw 30 having an outer threaded section 31 corresponding to the inner threaded section 12 of the compensation insert 10. The screw 30 further comprises a coupling section 32 being configured as a coupling element.

Fig. 2 shows how the connection element 30 is inserted into the first cavity 11 of the compensation insert 10 by means of pushing laterally to the compensation axis, which is the longitudinal middle axis of the compensation insert 10, the connection element 30 into the compensation insert 10. The outer threaded section 31 engages the inner threaded section 12 and thereby the connection element 30 becomes locked in the compensation insert 10.

Fig. 3 shows how the compensation insert 10 with the therein locked connection element 10 is, similarly to Fig. 2, assembled with the compensation holder 20 by pushing laterally to the compensation axis the compensation insert 10 inside of the second cavity 21, whereby the stop element 13 is placed in the stop receptacle 23.1 of the compensation holder 20.

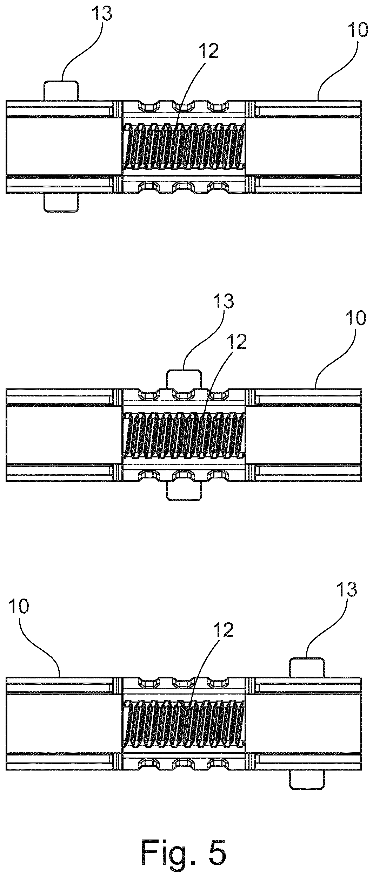

Fig. 5 shows two different compensation inserts 10. The top and bottom compensation inserts 10 are the same but rotated in clockwise direction about 180°. Here, the stop element 13 is provided on an outer section of the stop element 13. In between the outer sections of the stop element 13 there is the middle section. The compensation insert 10 in the middle of Fig. 5 is provided with the stop element 13 at the middle section.

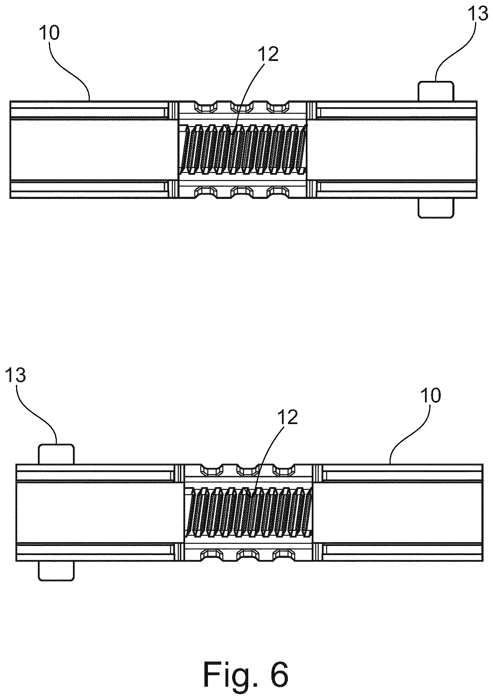

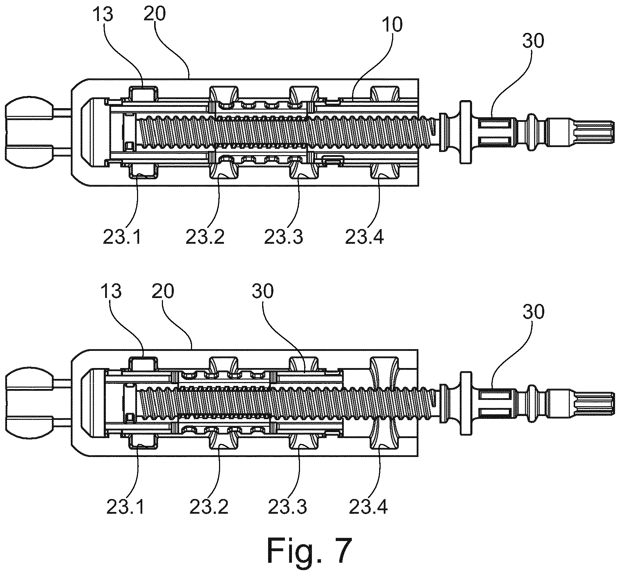

Fig. 6 shows two further compensation inserts similar to the top and bottom compensation inserts of Fig. 5 but with a greater length such that they may fit into other stop receptacles 23 of the compensation holder 20 and provide other effective expansion lengths, as will be explained with reference to the Figs. 7, 8 and 9.

Fig. 7 shows two different thermal-expansion compensators 1. The compensator 1 shown at the top of Fig. 7 has the compensation insert 10 of Fig. 6 with the orientation shown in the bottom of Fig. 6 locked by means of the stop element 13 into the first stop receptacle 23.1 of the compensation holder 20. Thereby, a maximum effective expansion length is formed from the stop element 13 through the entire compensation insert 10. The compensator effect provided by this configuration is a push effect to the left. This means that the compensation insert 10 extends along its effective expansion length when thermally exposed inside of the compensation holder 20 and by means of the stop element 13 pushes the compensation holder to the left side of the Fig. 7, i.e. in the direction away from the connection element 30.

In the compensator 1 shown at the bottom of Fig. 7, the compensation insert 10 shown as oriented at the top of Fig. 5 is inserted into the same compensation holder 20 as at the top of Fig. 7. In the bottom compensator 1, the effective expansion length is less than in the top compensator 1 of Fig. 7 due to its shorter length along the compensation axis A. Otherwise, the same push effect is achieved as explained above with reference to the top compensator 1 of Fig. 7.

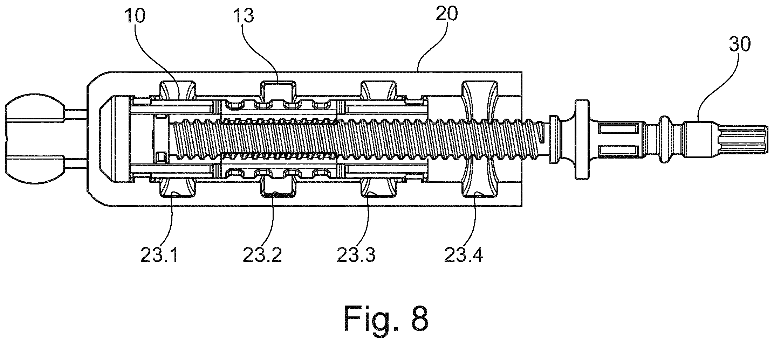

Fig. 8 shows a further example of a compensator 1 having the compensation insert 10 shown in the middle of Fig. 5. In this case, the stop element 13 is placed in the second stop receptacle 23.2 out of the four stop receptacles 23.1, 23.2, 23.3, 23.4. Here, there is no compensation effect provided by the compensator 1 or, in other words, is neutral. Such a configuration of a compensator 1 may be provided initially and later changed when it is observed that a different compensation insert 10 inside of the compensator 1 for the particular headlamp 100 is required due to its particular thermal behavior, e.g. one of the compensators 1 of Fig. 7.

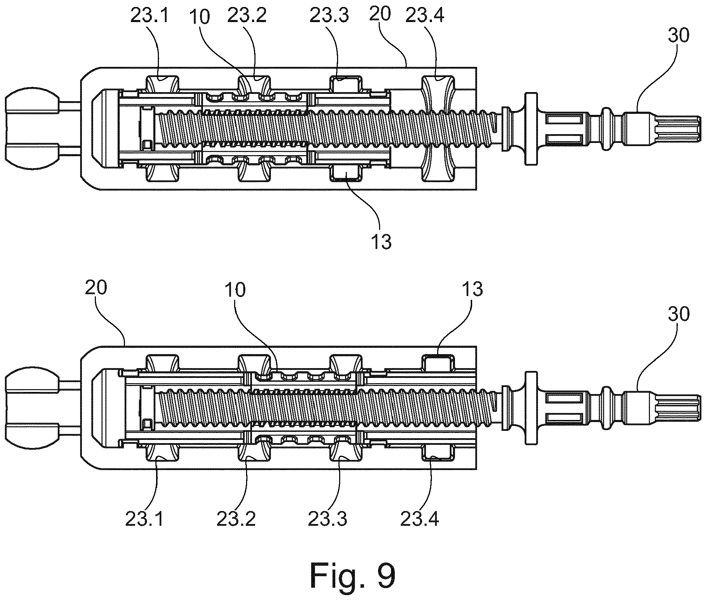

Fig. 9 shows two further examples of compensators 1 having the same compensation inserts 10 as the compensators 1 shown in Fig. 7 but with a different orientation of the compensation inserts 10 inside the compensation holders 20. In fact, they are rotated clockwise about 180°.

Accordingly, the top compensator 1 of Fig. 9 has the compensation insert 10 of the bottom compensator 1 of Fig. 7 with the difference that the stop element 13 of the compensation insert 10 is located inside the third stop receptacle 23.3 of the compensation holder 20. Thereby, a compensator effect corresponding to a pull effect is achieved. In this case, the effective expansion length is the same, but due to the body of the compensation insert 10 being positioned before the stop element 13 rather than after the stop element 13 (when viewed from left to right), the compensator effect is turned in the other direction, i.e. from the left to the right. The same pull effect is achieved in the bottom compensator 1 of Fig. 9, however, the overall thermal expansion of this bottom compensator 1 is more than in the top compensator 1 due to the increased length of the compensation insert 10, whereby the pull effect is increased.

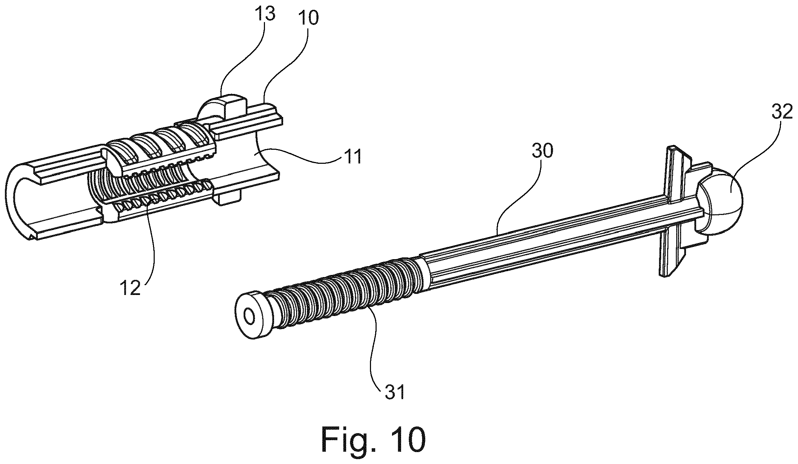

Fig. 10 shows an alternative assembly of a thermal-expansion compensator 1, in which the screw 30 comprises a ball joint at the coupling section 32.

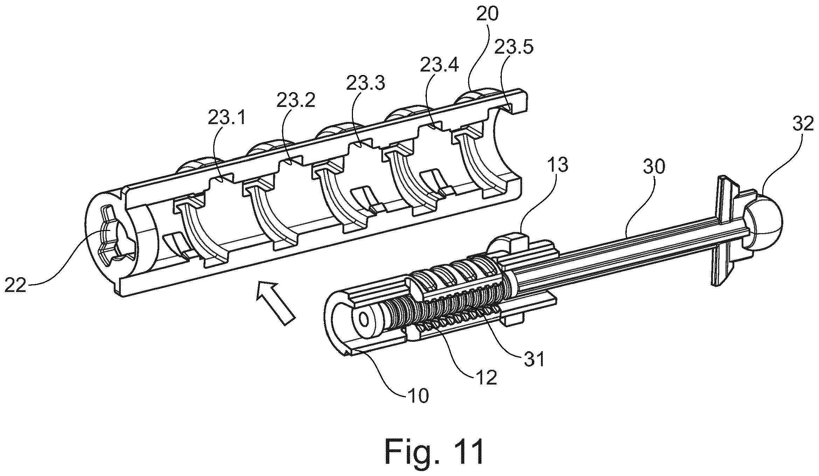

Fig. 11 shows how the joined screw 30 with the compensation insert 10 is inserted into an alternative design of a compensation holder 20 having five stop receptacles 23.1, 23.2, 23.3, 23.4, 23.5. Further, the coupling element 22 of the compensation holder 20 is designed as a female bayonet element in this case.

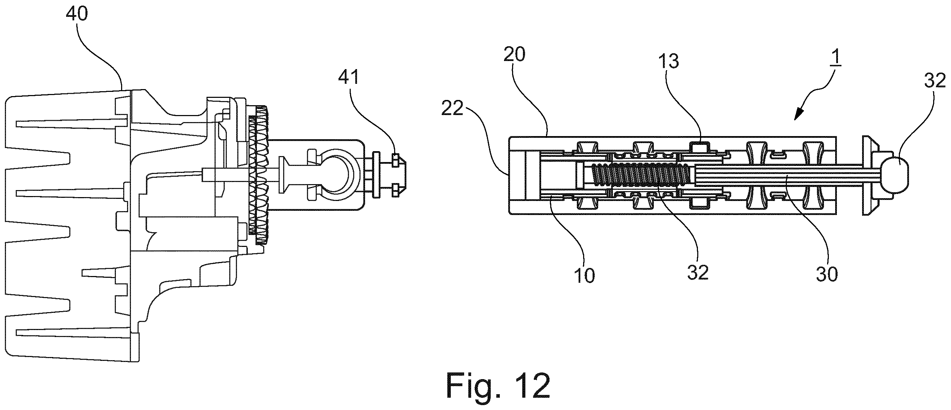

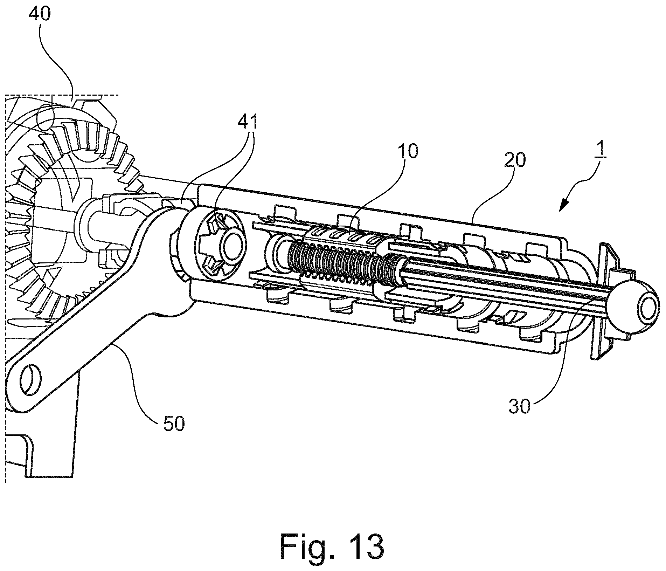

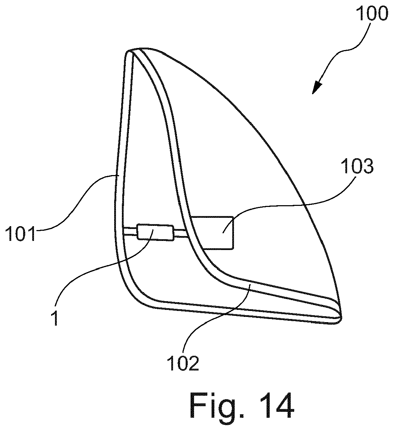

Fig. 12 shows the coupling of the assembled thermal-expansion compensator 1 of Fig. 11 with an aiming unit 40 being fixable to the housing 101 (shown in Fig. 14). The coupling element 41 of this holder 40 is a male bayonet element corresponding for interlocking with the coupling element 22 of the compensation holder 20. Fig. 13 further shows the coupling of Fig. 12, where the coupling element 41 has been inserted into the coupling element 22 and is being locked therein by means of a spanner 50 holding a nut geometry, in this case 6-kant, during bayonet locking.

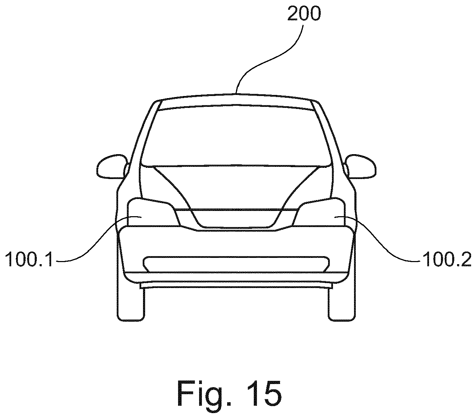

Fig. 14 shows an exemplary headlamp 100 for a vehicle 200 as shown in Fig. 15. From this figure it can be taken, that the thermal-expansion compensator 1 of any of the embodiments described above is positioned between the housing 101 and the light module 103. The light module 103 in this case comprises a carrier frame 102, to which the thermal-expansion compensator 1 is directly attached.

Fig. 15 shows the vehicle 200. The vehicle 200 comprises two headlamps 100.1, 100.2. Both headlamps 100.1, 100.2 are constructed as shown in Fig. 14 and explained with reference thereto.

### Reference number list

- 1: thermal-expansion compensator
- 10: compensation insert
- 11: first cavity
- 12: inside threaded section
- 13: stop element
- 14: first slot
- 20: compensation holder
- 21: second cavity
- 22: coupling element
- 23: stop receptacle
- 24: second slot
- 30: connection element, screw
- 31: outside threaded section
- 32: coupling element, coupling section
- 40: aiming unit
- 41: coupling element
- 50: spanner
- 100: headlamp
- 101: housing
- 102: carrier frame
- 103: light module
- 200: vehicle

## Claims

1. Thermal-expansion compensator (1) for holding a light module (103) in a housing (101) of a headlamp (100) of a vehicle (200), comprising:
(a) a compensation insert (10) extending along a compensation axis (A), the compensation insert (10) comprising a stop element (13) and the compensation insert (10) comprising a first cavity (11) therein,
(b) a compensation holder (20) extending along the compensation axis (A), the compensation holder (20) having at least two stop receptacles (23), whereby each of the at least two stop receptacles (23) is configured for holding the stop element (13) of the compensation insert (10), whereby the stop element (13) of the compensation insert (10) can be held selectively in one of the at least two stop receptacles (23) of the compensation holder (20) to form an effective expansion length, and
(c) a connection element (30), the connection element (30) being connectable to the compensation insert (10) inside of the first cavity (11) and being connectable to the housing (101) and/or light module (103) of the headlamp (100), such that the compensation insert (10) can expand or contract freely in the compensation holder (20) along the compensation axis (A) with its effective expansion length,
wherein the compensation holder (20) is connected rigidly to the other one of the housing (101) or light module (103),
whereby the stop element (13) extends from the compensation insert (10) transverse, in particular perpendicular, to the compensation axis (A),
**characterized in that**
the stop element (13) further extends around the compensation insert (10) in a circumferential direction relative to the compensation axis (A).

2. Thermal-expansion compensator (1) according to claim 1, whereby the stop element (13) of the compensation insert (10) is held in one of the at least two stop receptacles (23), the compensation insert (10) is located inside of a second cavity (21) of the compensation holder (20) and the connection element (30) is connected to the compensation insert (10) inside of the first cavity (11).

3. Thermal-expansion compensator (1) according to claim 1 or 2, whereby the connection element (30) is a screw (30).

4. Thermal-expansion compensator (1) according to claim 3, whereby the screw (30) comprises an outside threaded section (31) and the compensation insert (10) comprises an inside threaded section (12) in its first cavity (11) for locking the screw (30) inside of the compensation insert (10).

5. Thermal-expansion compensator (1) according to any of the previous claims, whereby the compensation holder (20) and/or the connection element (30) comprises a coupling element (22, 32) for connecting with the housing (101) and/or the light module (103).

6. Thermal-expansion compensator (1) according to claim 5, whereby the coupling element (22, 32) is a bayonet coupling element (22).

7. Thermal-expansion compensator (1) according to claim 5, whereby the coupling element (22, 32) is a spherical head (22) or a spherical socket.

8. Thermal-expansion compensator (1) according to any of the previous claims, whereby the at least two stop receptacles (23) are spaced apart from each other in the compensation holder (20) along the compensation axis (A).

9. Thermal-expansion compensator (1) according to any of the previous claims, whereby the compensation insert (10) and/or the compensation holder (20) is made from plastic.

10. Thermal-expansion compensator (1) according to any of the previous claims, whereby the compensation insert (10) and/or the compensation holder (20) is rotationally symmetric with respect to the compensation axis (A).

11. Headlamp (100) for a vehicle (200) with a housing (101), in which at least one light module (103) is held in a predetermined position, whereby the headlamp (100) comprises at least one thermal-expansion compensator (1) according to any of the previous claims, the thermal-expansion compensator (1) being disposed between the housing (101) and the light module (103).

12. Vehicle (200) having a headlamp (100) according to claim 11.

## Patentansprüche

1. Wärmeausdehnungskompensator (1) zum Halten eines Lichtmoduls (103) in einem Gehäuse (101) eines Scheinwerfers (100) eines Fahrzeugs (200), umfassend:
(a) einen Kompensationseinsatz (10), der sich entlang einer Kompensationsachse (A) erstreckt, wobei der Kompensationseinsatz (10) ein Anschlagelement (13) umfasst und der Kompensationseinsatz (10) einen ersten Hohlraum (11) darin umfasst,
(b) einen Kompensationshalter (20), der sich entlang der Kompensationsachse (A) erstreckt, wobei der Kompensationshalter (20) mindestens zwei Anschlagaufnahmen (23) aufweist, wobei jede der mindestens zwei Anschlagaufnahmen (23) dazu konfiguriert ist, das Anschlagelement (13) des Kompensationseinsatzes (10) zu halten, wobei das Anschlagelement (13) des Kompensationseinsatzes (10) wahlweise in einer von den mindestens zwei Anschlagaufnahmen (23) des Kompensationshalters (20) gehalten werden kann, um eine effektive Ausdehnungslänge zu bilden, und
(c) ein Verbindungselement (30), wobei das Verbindungselement (30) mit dem Kompensationseinsatz (10) innerhalb des ersten Hohlraums (11) verbindbar ist und mit dem Gehäuse (101) und/oder Lichtmodul (103) des Scheinwerfers (100) verbindbar ist, sodass sich der Kompensationseinsatz (10) in dem Kompensationshalter (20) entlang der Kompensationsachse (A) mit seiner effektiven Ausdehnungslänge frei ausdehnen oder zusammenziehen kann,
wobei der Kompensationshalter (20) starr mit dem anderen einen von dem Gehäuse (101) oder dem Lichtmodul (103) verbunden ist,
wobei sich das Anschlagelement (13) von dem Kompensationseinsatz (10) quer, insbesondere senkrecht, zur Kompensationsachse (A) erstreckt, **dadurch gekennzeichnet, dass**
sich das Anschlagelement (13) ferner in einer Umfangsrichtung relativ zur Kompensationsachse (A) um den Kompensationseinsatz (10) erstreckt.

2. Wärmeausdehnungskompensator (1) nach Anspruch 1, wobei das Anschlagelement (13) des Kompensationseinsatzes (10) in einer von den mindestens zwei Anschlagaufnahmen (23) gehalten wird, wobei der Kompensationseinsatz (10) innerhalb eines zweiten Hohlraumes (21) des Kompensationshalters (20) angeordnet ist und das Verbindungselement (30) mit dem Kompensationseinsatz (10) innerhalb des ersten Hohlraumes (11) verbunden ist.

3. Wärmeausdehnungskompensator (1) nach Anspruch 1 oder 2, wobei das Verbindungselement (30) eine Schraube (30) ist.

4. Wärmeausdehnungskompensator (1) nach Anspruch 3, wobei die Schraube (30) einen Außengewindeabschnitt (31) umfasst und der Kompensationseinsatz (10) in seinem ersten Hohlraum (11) einen Innengewindeabschnitt (12) zum Festziehen der Schraube (30) innerhalb des Kompensationseinsatzes (10) umfasst.

5. Wärmeausdehnungskompensator (1) nach einem der vorhergehenden Ansprüche, wobei der Kompensationshalter (20) und/oder das Verbindungselement (30) ein Kopplungselement (22, 32) zum Verbinden mit dem Gehäuse (101) und/oder dem Lichtmodul (103) umfasst.

6. Wärmeausdehnungskompensator (1) nach Anspruch 5, wobei das Kopplungselement (22, 32) eine Bajonettkopplungselement (22) ist.

7. Wärmeausdehnungskompensator (1) nach Anspruch 5, wobei das Kopplungselement (22, 32) ein Kugelkopf (22) oder eine kugelförmige Aufnahme ist.

8. Wärmeausdehnungskompensator (1) nach einem der vorhergehenden Ansprüche, wobei die mindestens zwei Anschlagaufnahmen (23) in dem Kompensationshalter (20) entlang der Kompensationsachse (A) voneinander beabstandet sind.

9. Wärmeausdehnungskompensator (1) nach einem der vorhergehenden Ansprüche, wobei der Kompensationseinsatz (10) und/oder der Kompensationshalter (20) aus Kunststoff hergestellt sind.

10. Wärmeausdehnungskompensator (1) nach einem der vorhergehenden Ansprüche, wobei der Kompensationseinsatz (10) und/oder der Kompensationshalter (20) in Bezug auf die Kompensationsachse (A) drehsymmetrisch sind.

11. Scheinwerfer (100) für ein Fahrzeug (200) mit einem Gehäuse (101), in dem mindestens ein Lichtmodul (103) in einer vorbestimmten Position gehalten wird, wobei der Scheinwerfer (100) mindestens einen Wärmeausdehnungskompensator (1) nach einem der vorhergehenden Ansprüche umfasst, wobei der Wärmeausdehnungskompensator (1) zwischen dem Gehäuse (101) und dem Lichtmodul (103) angeordnet ist.

12. Fahrzeug (200) mit einem Scheinwerfer (100) nach Anspruch 11.

## Revendications

1. Compensateur de dilatation thermique (1) pour maintenir un module d'éclairage (103) dans un boîtier (101) d'un projecteur (100) d'un véhicule (200), comprenant :
(a) un insert de compensation (10) s'étendant le long d'un axe de compensation (A), l'insert de compensation (10) comprenant un élément de butée (13) et l'insert de compensation (10) comprenant une première cavité (11),
(b) un support de compensation (20) s'étendant le long de l'axe de compensation (A), le support de compensation (20) ayant au moins deux réceptacles de butée (23), chacun des deux réceptacles de butée minimum (23) étant configuré pour contenir l'élément de butée (13) de l'insert de compensation (10), l'élément de butée (13) de l'insert de compensation (10) pouvant être maintenu au choix dans l'un des deux réceptacles de butée minimum (23) du support de compensation (20) pour former une longueur de dilatation effective, et
(c) un élément de connexion (30), l'élément de connexion (30) pouvant être relié à l'insert de compensation (10) à l'intérieur de la première cavité (11) et pouvant être relié au boîtier (101) et/ou au module d'éclairage (103) du projecteur (100), de sorte que l'insert de compensation (10) puisse se dilater ou se contracter librement dans le support de compensation (20) le long de l'axe de compensation (A) avec sa longueur de dilatation effective,
le support de compensation (20) étant relié de manière rigide à l'autre partie du boîtier (101) ou du module d'éclairage (103),
l'élément de butée (13) s'étendant à partir de l'insert de compensation (10) transversalement, en particulier perpendiculairement, à l'axe de compensation (A), **caractérisé par le fait que**
l'élément de butée (13) s'étend en outre autour de l'insert de compensation (10) dans une direction circonférentielle par rapport à l'axe de compensation (A).

2. Compensateur de dilatation thermique (1) selon la revendication 1, l'élément de butée (13) de l'insert de compensation (10) étant maintenu dans l'un des deux réceptacles de butée minimum (23), l'insert de compensation (10) étant situé à l'intérieur d'une deuxième cavité (21) du support de compensation (20) et l'élément de connexion (30) étant relié à l'insert de compensation (10) à l'intérieur de la première cavité (11).

3. Compensateur de dilatation thermique (1) selon la revendication 1 ou 2, l'élément de connexion (30) étant une vis (30).

4. Compensateur de dilatation thermique (1) selon la revendication 3, la vis (30) comprenant une section filetée extérieure (31) et l'insert de compensation (10) comprenant une section filetée intérieure (12) dans sa première cavité (11) pour bloquer la vis (30) à l'intérieur de l'insert de compensation (10).

5. Compensateur de dilatation thermique (1) selon l'une des revendications précédentes, le support de compensation (20) et/ou l'élément de connexion (30) comprenant un élément de couplage (22, 32) pour la connexion avec le boîtier (101) et/ou le module d'éclairage (103).

6. Compensateur de dilatation thermique (1) selon la revendication 5, l'élément de couplage (22, 32) étant un élément de couplage à baïonnette (22).

7. Compensateur de dilatation thermique (1) selon la revendication 5, l'élément de couplage (22, 32) étant une tête sphérique (22) ou une douille sphérique.

8. Compensateur de dilatation thermique (1) selon l'une des revendications précédentes, les deux réceptacles de butée minimum (23) étant espacés l'un de l'autre dans le support de compensation (20) le long de l'axe de compensation (A).

9. Compensateur de dilatation thermique (1) selon l'une des revendications précédentes, l'insert de compensation (10) et/ou le support de compensation (20) étant en plastique.

10. Compensateur de dilatation thermique (1) selon l'une des revendications précédentes, l'insert de compensation (10) et/ou le support de compensation (20) présentant une symétrie de rotation par rapport à l'axe de compensation (A).

11. Projecteur (100) pour un véhicule (200) avec un boîtier (101), dans lequel au moins un module lumineux (103) est maintenu dans une position prédéterminée, le projecteur (100) comprenant au moins un compensateur de dilatation thermique (1) selon l'une des revendications précédentes, le compensateur de dilatation thermique (1) étant disposé entre le boîtier (101) et le module lumineux (103).

12. Véhicule (200) comportant un projecteur (100) selon la revendication 11.
